# EUROPEAN PATENT APPLICATION

(11) **EP 3 407 257 A1**
(43) Date of publication of application: **28.11.2018**
(21) Application number: 18174318.8
(22) Date of filing: 25.05.2018
(51) Int. Cl.: G06K 9/00, G06K 9/32, G06K 9/62, G08G 1/16

(54) **METHOD FOR GENERATING A WIDE-AREA PERCEPTION SCENE GRAPH**

(30) Priority: 26.05.2017 US 201715607061; 26.05.2017 US 201715607067; 26.05.2017 US 201715607070; 26.05.2017 US 201715606796; 18.08.2017 US 201715680676
(71) Applicant: Dura Operating, LLC, Auburn Hills, MI 48326 (US)
(72) Inventor: HOVIS, Jeffrey Gene, Almont, MI Michigan 48003 (US); SZCZERBA, Michael Bernhard, Troy, MI Michigan 48084 (US)
(74) Representative: Bungartz Christophersen Partnerschaft mbB Patentanwälte

(57) **Abstract**

A method and system is provided for generating a wide-area perception scene graph (PSG) for a motor vehicle. The method and system include collecting sensor information by at least one external sensor having an effective sensor range; processing the sensor information by a perception controller to generate a host perception scene graph (Host PSG); receiving a remote perception scene graph (Remote PSG) transmitted from at least one remote unit proximal to the host vehicle; and fusing the Host PSG with the Remote PSG by the perception controller to generate a Wide-Area perception scene graph (Wide-Area PSG). The Wide-Area PSG may be extended to a portable electronic device by utilizing short-range wireless communications and/or communicated to a remote vehicle by vehicle-to-everything (V2X) communications. The V2X communications may include autonomous driving instructions for the remote vehicle to navigate the geographic area represented by the Wide-Area PSG.

## Description

This application is a continuation-in-part of U.S. Patent Application No. 15/607,061, filed May 26, 2017; a continuation-in-part of U.S. Patent Application No. 15/607,067, filed May 26, 2017; a continuation-in-part of U.S. Patent Application No. 15/607,070, filed May 26, 2017; and a Continuation-in-part of U.S. Patent Application No. 15/606,796, filed May 26, 2017; all of which are incorporated herein in their entireties by reference.

### FIELD

The invention relates generally to perception systems for motor vehicles; more particularly, to a method and to a system for perceiving a wide-area beyond the effect ranges of the external sensors for a motor vehicle.

### BACKGROUND

The statements in this section merely provide background information related to the present disclosure and may or may not constitute prior art.

Advanced Driver Assistance Systems (ADAS) are used in motor vehicles to enhance or automate selective motor vehicle systems in order to increase occupant safety and operator driving performance. ADAS include vehicle controllers that are in communication with the vehicle perception system, vehicle state sensors, and selective motor vehicle systems, such as occupant safety systems and vehicle control systems. The vehicle controllers analyze information gathered by the perception system and vehicle state sensors to provide instructions to the vehicle control systems to assist the vehicle in avoiding and/or navigating around obstacles as the vehicle travels down a road.

The vehicle perception system utilizes external sensors to collect information on the areas surrounding the motor vehicle. The external sensors are the eyes and ears of the motor vehicle enabling the perception system to perceive the areas surrounding the motor vehicle. Examples of typical external sensors include lasers, radar, sonar, ultrasound, radar, and Light Detection and Ranging (LiDAR) sensors. The effectiveness of the perception system is limited by the effective ranges of the external sensors.

Thus, while current perception systems achieve their intended purpose, there is a need for a new and improved method and perception system for perceiving a wider geographic area beyond that the effective ranges of the external sensors.

### SUMMARY

According to several aspects, a method of generating a wide-area perception scene graph is provided. The method includes the steps of: identifying a geographical area of interest; generating, by a host perception system on a host unit located within the geographical area, a host perception scene graph (Host PSG) comprising a virtual representation of an area surrounding the host unit; communicating a Remote PSG to the host perception system on the host unit; and fusing the Host PSG with the Remote PSG, by the host perception system, thereby generating a wide-Area perception scene graph (Wide-Area PSG). The Wide-Area PSG includes a virtual representation of a portion of the geographical area beyond the area surrounding the host unit

According to several aspects, a method of generating a wide-area perception scene graph is disclosed. The method includes the steps of identifying a geographical area of interest; generating, by a host perception system on a host unit located within the geographical area, a host perception scene graph (Host PSG) including a virtual representation of an area surrounding the host unit; generating, by a remote perception system on a remote unit located within the geographical area, a remote perception scene graph (Remote PSG) including a virtual representation of an area surrounding the remote unit; communicating the Remote PSG to the host perception system on the host unit; and fusing the Host PSG with the Remote PSG, by the host perception system, thereby generating a wide-Area perception scene graph (Wide-Area PSG). The Wide-Area PSG includes a virtual representation of a portion of the geographical area beyond the area surrounding the host unit.

In an additional aspect of the present disclosure, one of the host unit and remote unit is a vehicle roaming within the geographical area, and the other of the host unit and remote unit is a stationary infrastructure unit.

In another aspect of the present disclosure, the step of communicating the Remote PSG to the host perception system on the host unit is conducted by utilizing vehicle-to-everything (V2X) communications.

In another aspect of the present disclosure, the method further includes the steps of generating, by a plurality of remote units located in various locations within the geographical area, a plurality of Remote PSGs; communicating the plurality of Remote PSGs to the host unit; and fusing the Host PSG with the plurality of Remote PSGs by the host perception system to generate a Wide-Area PSG comprising a virtual representation of a greater portion of the geographical area than any one of the Host PSG or Remote PSG individually. Each of the plurality of Remote PSG includes a virtual representation of an area surrounding the respective remote units

In another aspect of the present disclosure, the host unit is a motor vehicle, and the remote unit includes a plurality of motor vehicles and road-side-units.

In another aspect of the present disclosure, the host unit is a portable communication device configured to visually display the Wide-area PSG.

In another aspect of the present disclosure, the portable communication device is a visual display in a helmet.

In another aspect of the present disclosure, the method further include the step of the step of extending the Wide-Area PSG using wire-less communication to a portable communication device configured to visually display the Wide-Area PSG.

In another aspect of the present disclosure, the plurality of Remote PSG includes over-lapping regions. The method further includes the steps of defining a focus zone within the geographical area; identifying over-lapping regions within the focus zone; and fusing the overlapping regions to obtain greater fidelity and confidence levels in the overlapping regions within the focus zone.

In another aspect of the present disclosure, the Wide-Area PSG includes regions of insufficient information provided by the Host PSG or Remote PSG. The method further includes the step of fusing a preloaded map of the geographical area to supplement the regions of the Wide-Area PSG having regions of insufficient information.

According to several aspects, a method of generating and using a wide-area perception scene graph by a motor vehicle is disclosed. The method includes the steps of collecting sensor information, by at least one external sensor having an effective sensor range, about an area surrounding a host motor vehicle; processing the sensor information, by a perception controller, to generate a host perception scene graph (Host PSG) comprising a virtual model of the area surrounding the host motor vehicle; receiving a remote perception scene graph (Remote PSG) transmitted from at least one remote unit proximal to the host vehicle; and fusing the Host PSG with the Remote PSG, by the perception controller, thereby generating a Wide-Area perception scene graph (Wide-Area PSG) including a virtual model of an area extending beyond the effective sensor range of the host vehicle. The Remote PSG includes a virtual model of an area surrounding the at least one remote unit.

In an additional aspect of the present disclosure, the method further includes the step of transmitting the Wide-Area PSG to the at least one remote unit.

In another aspect of the present disclosure, the method further includes the step of transmitting instructions to the at least one remote unit. The instructions include autonomous driving instructions.

In another aspect of the present disclosure, the steps of receiving the Remote PSG and transmitting the Wide-Area PSG is performed by utilizing vehicle-to-everything (V2X) communications.

In another aspect of the present disclosure, further include the step of extending the Wide-Area PSG to a portable electronic device by utilizing short-range wireless communications.

In another aspect of the present disclosure, the portable electronic device includes a display visor for an operator of the motor vehicle.

According to several aspects, a perception system for generating a Wide-Area perception scene graph (PSG) is disclosed. The perception system includes a human machine interface (HMI) configured to receive an input, wherein the input includes a location of a geographical area; a receiver configured to receive a remote perception scene graph (Remote PSG) generated by a remote unit located within the geographical area, wherein the Remote PSG comprises a virtual representation of an area surrounding the remote unit; a host external sensor configured to collect sensor information about an area surrounding a host unit located with the geographical area; a processor configured to process the collected sensor information to (i) generate a host perception scene graph (Host PSG) including a virtual representation of the area surrounding the host unit and (ii) to fuse the Remote PSG with the Host PSG to generate a Wide-Area perception scene graph (Wide-Area PSG) including a portion of the geographical area.

In an additional aspect of the present disclosure, perception system further includes a short-range wireless communication device for extending the Wide-Area PSG to a portable electronic device.

In an additional aspect of the present disclosure, the portable electronic device is a smart phone.

In another aspect of the present disclosure, the perception system further includes a vehicle-to-everything (V2X) communication device for receiving the Remote PSG.

The method and system for generating a wide-area PSG enables a host motor vehicle or host infrastructure unit, each may be referred to as a host unit, to perceive a wider geographic area beyond that the external sensor ranges of the host unit. The disclosed method and system enables the host unit to communicate the Wide-Area PSG to remote vehicles or remote infrastructures, each may be referred to as remote units, by V2X communications to enable the remote units to perceive a wider geographic area beyond that the external sensor ranges of the remote unit. Instructions such as vehicle commands to navigate a vehicle through the geographic area of interest as represented by the Wide-Area PSG maybe be communicated between the host unit and remote vehicle by V2X communications.

Other benefits and further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.
- FIG. 1: is a functional diagram of a process for generating and using a perception scene graph (PSG) in a motor vehicle, according to an exemplary embodiment;
- FIG. 2: is a functional diagram of a perception system and a vehicle state decision logic (SDL) controller, according to an exemplary embodiment;
- FIG. 3: is a vehicle having the perception system and the vehicle SDL controller of FIG. 2, according to an exemplary embodiment;
- FIG. 4: is an illustration of a host vehicle traveling within a geographical area of interest, according to an exemplary embodiment;
- FIG. 5: is an illustration of the Wide-Area perception scene graph of FIG. 4 extended onto various devices; and
- FIG. 6: shows a method of generating the Wide-Area perception scene graph.

### DETAILED DESCRIPTION

The following description is merely exemplary in nature and is not intended to limit the present disclosure, application, or uses.

A perception scene graph (PSG) is a data structure that contains processed information representing a virtual 3-Dimensonal (3-D) model of a volume of space and/or area surrounding the motor vehicle, including any objects within that volume of space and/or area. A PSG can be viewed as a visually-grounded graphical structure of the real-world surrounding the motor vehicle. In the PSG, objects are isolated from the background scene, characterized, and located with respect to the motor vehicle. The movements of the objects may be tracked and recorded. The movements of the objects may also be predicted based on historic locations and trends in the movements.

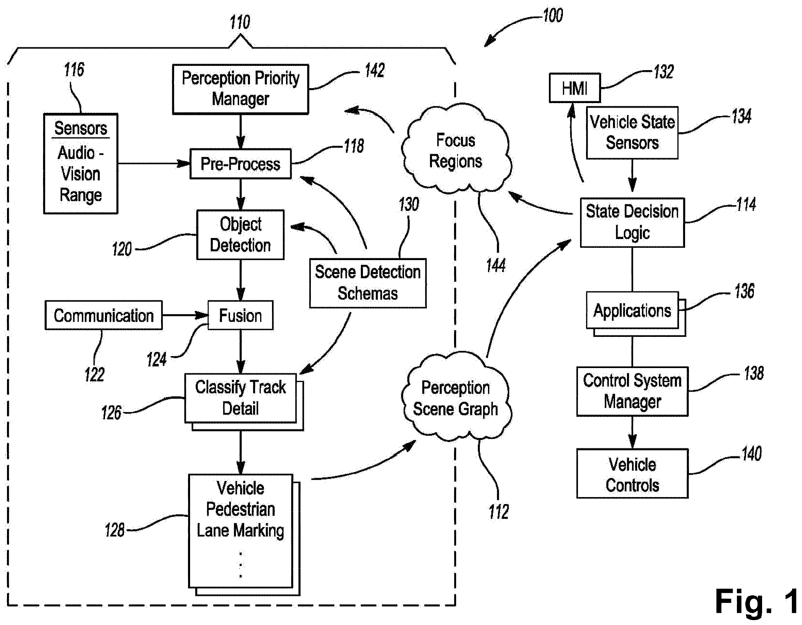

FIG. 1 shows a functional diagram 100 of a perception process 110 for generating a perception scene graph (PSG) 112 and the use of the PSG 112 by a motor vehicle having state decision logic (SDL) 114. The perception process 110 publishes the PSG 112 and the vehicle SDL 114 subscribes to and extracts the processed information from the PSG 112. The vehicle SDL 114 uses the extracted information as input for the execution of a variety of vehicle software applications.

The perception process 110 starts in block 116 where the external sensors of the motor vehicle gather information about a volume of space surrounding the motor vehicle, including the surrounding areas. The surrounding areas include the areas adjacent the motor vehicle, the areas spaced from the motor vehicle, and the areas located 360 degrees about the vehicle. In other words, the surrounding areas include all the areas surrounding the vehicle that are within the effective range and field of coverage of the sensors.

The gathered raw external sensor information is pre-processed in block 118 and objects are isolated and detected in block 120 from the background scene. The distance and direction of each object relative to the motor vehicle are also determined. The information gathered about a volume of space, including the areas surrounding the motor vehicle is limited by the audio-visual ranges of the external sensors.

In block 122, incoming communications containing information on additional objects within and/or beyond the audio-visual range of the external sensors are communicated to the motor vehicle via vehicle-to-everything (V2X) communication to supplement the objects detected in block 120. V2X communication is the passing of information from a vehicle to any communication device and vice versa, including, but not limited to, vehicle-to-vehicle (V2V), vehicle-to-infrastructure (V2I), vehicle-to-pedestrian (V2P), vehicle-to-device (V2D), and vehicle-to-grid (V2G) communications. In block 124, the information gathered by the external sensors from block 116 and information communicated to the motor vehicle from block 122 are fused to increase the confidence factors of the objects detected together with the range and direction of the objects relative to the motor vehicle. The information communicated to the motor vehicle from block 122 may be in the form of remote perception scene graphs generated by similarly equipped remote vehicles or infrastructure units.

In blocks 126 and 128, once the various information are fused, the detected objects are compared with reference objects in a database to identify the classification of the objects. The types of classification include, but are not limited to, types of lane markings, traffic signs, infrastructure, vehicles, pedestrians, animals, and any other animate or inanimate objects that may be found in a typical roadway. Once the objects are classified, the movements of the objects are tracked and predicted based on historic locations and trends in movement of the objects.

The perception process 110 is partially controlled by a scene detection schema (SDS) at block 130. The SDS describes what objects in block 120 and classifications in block 126 to search for at a particular point in time. In block 142, a perception priority manager has the responsibility to control and manage which tasks to perform in the perception pre-processing of block 118. For example, the perception priority manager may allocate greater processing power to the sensors directed rearward of the vehicle as the vehicle is moving rearward into a parking space.

The PSG 112 is generated containing information on a set of localized objects, categories of each object, and relationship between each object and the motor vehicle. The PSG 112 is continuously updated by the information gathered by the external sensors in block 116 and communications received by V2X communications in block 122 to reflect the real time change of the adjacent and non-adjacent volume of space and areas surrounding the motor vehicle. The historical events of the PSG 112 may be recorded in the perception controller's memory to be retrieved at a later time.

In block 114, the vehicle SDL, which may be part of the motor vehicle ADAS, subscribes to the PSG 112 to extract information pertaining to the external surrounding volume of space and areas of the motor vehicle. The vehicle SDL 114 can process the information contained in the PSG 112 to render and display on a human machine interface (HMI) shown in block 132, such as a display monitor on the dash of the motor vehicle or a display visor worn by an operator of the vehicle, a virtual three-dimensional landscape representing the real-world environment surrounding the motor vehicle.

The vehicle SDL 114 can also analyze the information extracted from the PSG 112 to manage the current state of the vehicle control system managers in block 138 and to control the transitions of the control system managers to new states. The vehicle SDL 114 receives information from the vehicle state sensors of block 134 to determine the state of the motor vehicle such as location, velocity, acceleration, yaw, pitch, etc. With information from the PSG 112 and vehicle state sensor information from block 134, the vehicle SDL 114 can execute routines contained in software applications in block 136 to send instructions to the motor vehicle control system manager 138 to operate the vehicle controls 140.

As the vehicle SDL 114 executes routines contained in software applications 136, the software applications 136 may require greater fidelity or information relating to regions of interest, or focus regions 144. This would be similar to the action taken by a vehicle driver of turning their head to see if a vehicle is present before they perform a lane change. A focus region 144 defines an area or volume of space that is important to the software applications of block 136 during a particular time span. The required focus region 144 is communicated to the perception priority manger in block 142, which in turn the priority manager allocates greater processing power to the sensors directed to the required focus region 144 and allocates greater processing power to the sensors directed.

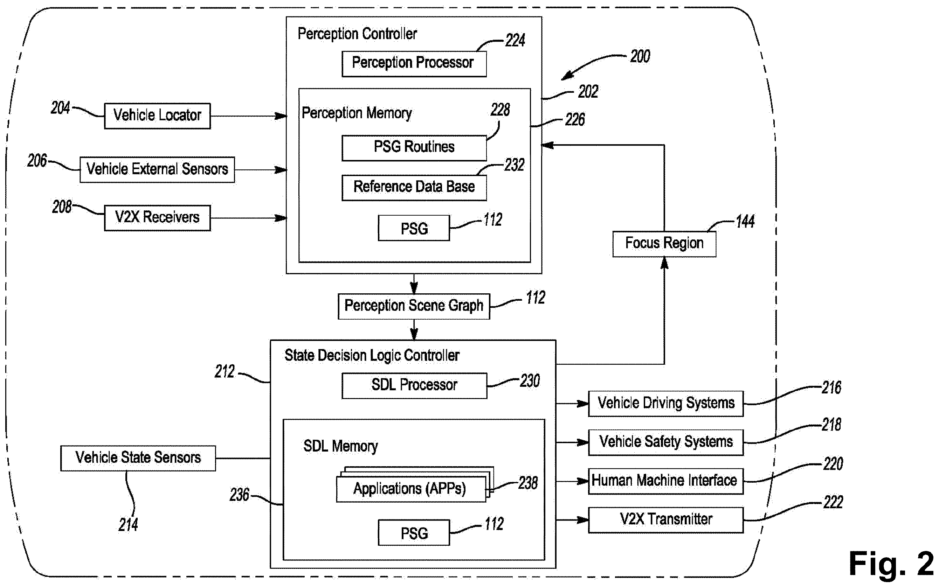

FIG. 2 shows a functional diagram of a perception system 200 having a perception controller 202 configured to receive information from a vehicle locator 204, a plurality of external sensors 206, and V2X receivers 208. FIG. 2 also shows a functional diagram of a SDL controller 212 configured to receive vehicle state information from a plurality of vehicle state sensors 214. The SDL controller 212 is configured to be in communication with the vehicle driving systems 216, vehicle safety systems 218, vehicle HMI 220, and vehicle V2X transmitters 222.

The perception controller 202 includes a perception processor 224 and a perception memory 226. The perception processor 224 processes the information gathered from the vehicle locator 204, external sensors 206, and V2X receivers, and executes PSG routines 228 stored in the perception memory 226 to generate the PSG 112 in real time as the motor vehicle is stationary or traveling along a roadway. A real time copy of the PSG 112 is published in the perception memory 226 for availability to various systems that require information pertaining to the surroundings of the vehicle. The perception memory 226 also includes a reference database 232 containing reference objects that are used to compare with the detected objects for classifying the detected objects. The reference database 232 includes the geometry and classifications of each of the reference objects. The perception memory 226 may also include a preloaded map to supplement information gathered by the external sensors 206.

The external sensors 206 are sensors that can detect physical objects and scenes surrounding the motor vehicle. The external sensors 206 include, but are not limited to, radar, laser, scanning laser, camera, sonar, ultra-sonic devices, LIDAR, and the like. The external sensors 206 may be mounted on the exterior of the vehicle such as a rotating laser scanner mounted on the roof of the vehicle or mounted within the interior of the vehicle such as a front camera mounted behind the windshield. Certain of these external sensors 206 are configured to measure the distance and direction of the detected objects relative to the location and orientation of the motor vehicle. Raw information acquired by these external sensors 206 are processes by the perception controller 202 to determine the classification, size, density, and/or color of the detected objects. The external sensors 206 are configured to continuously update their outputs to the perception controller 202 to reflect the real-time changes in the volume of space and the areas surrounding the motor vehicle as the information is being collected.

The vehicle SDL controller 212 includes a SDL processor 234 and a SDL memory 236. The SDL controller 212 receives information from the vehicle state sensors 214 and is in communication with various vehicle systems and components such as the driving system 216, safety system 218, HMI 220, and V2X transmitters 222. The SDL processor 230 processes information gathered by the vehicle state sensors 214 and subscribes to the PSG 112 to execute software applications stored in the SDL memory 236 to issue instructions to one or more of the vehicle systems 216, 218, 220, 222. The routines include various vehicle software applications 238, also known as vehicle APPS 238, including routines for the operations of the vehicle driving and safety systems 216, 218. For example, the vehicle SDL controller 212 may be in communication with the vehicle driving system 216 that controls the vehicle's deceleration, acceleration, steering, signaling, navigation, and positioning. The SDL memory 236 may also include software applications to render the information stored in the PSG 112 to be displayed on a HMI device 220 such as a display monitor on the dash of the vehicle.

The SDL memory 236 may also include software applications 238 that requires greater fidelity information in area or volume of space, also known as a focus region 144 that is important to the software applications 238 during a particular time span. The required focus region 144 is communicated to the perception controller 202 by the SDL controller 212. The perception controller 202 allocates greater processing power to process information collected by the external sensors 206 directed to the required focus region 144.

The perception processor 224 and SDL processor 230 may be any conventional processor, such as commercially available CPUs, a dedicated ASIC, or other hardware-based processor. The perception memory 226 and SDL memory 236 may be any computing device readable medium such as hard-drives, solid state memory, ROM, RAM, DVD or any other medium that is capable of storing information that is accessible to the perception processor. Although only one perception controller 202 and only one SDL controller 212 are shown, it is understood that the vehicle may contain multiple perception controllers 202 and multiple SDL controllers 212.

Each of the perception and SDL controllers 202, 212 may include more than one processor and memory, and the plurality of processors and memories do not necessary have to be housed within the respective controllers 202, 212. Accordingly, references to a perception controller 202, perception processor, and perception memories 226 include references to a collection of such perception controllers 202, perception processors, and perception memories that may or may not operate in parallel. Similarly, references to a SDL controller 212, SDL processor 230, and SDL memories 236 include references to a collection of SDL controllers 212, SDL processors 230, and SDL memories 236 that may or may not operate in parallel.

The information contained in the PSG 112 is normalized to the motor vehicle to abstract out the vehicle locator 204, external sensors 206, and V2X receivers 208 as the sources of the information. In other words, the SDL controller 212 is isolated from the raw information that the perception controller 202 receives from the vehicle locator 204, external sensors 206, and V2X receivers 208. With respect to the external surroundings of the motor vehicle, the SDL controller 212 extracts the processed information stored in the PSG 112 as input to execute software applications 238 for the operation of the motor vehicle. The SDL controller 212 does not see the real-world surroundings of the motor vehicle, but only see the virtual 3D model of the real-word surrounding generated by the perception controller 202. A primary benefit to this is that the external sensors 206 and types of external sensors 206 may be substituted without the need to replace the SDL processors 230 and/or upgrade the software applications contained in the SDL memories 236 to accommodate for the different external sensor types. A real-time copy of the PSG 112 may be published by the perception controller 202 and copied to SDL controller 212 and various other system controllers and/or computing devices throughout the motor vehicle. This ensures that if one or more of the perception controllers 202 and/or SDL controller 212 should fail, the various other system controllers and/or computing devices will be able to operate temporary in a "limp-home" mode to navigate the motor vehicle into a safe zone or area.

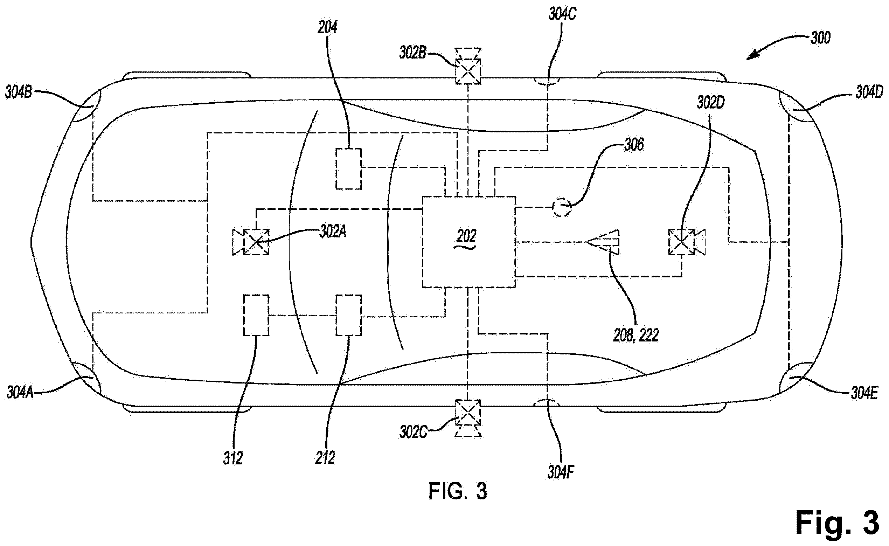

FIG. 3 shows an exemplary land based motor vehicle 300 equipped with the perception system 200 and SDL controller 212 of FIG. 2. For illustrative purposes, a passenger type motor vehicle is shown; however, the motor vehicle may be that of a truck, sport utility vehicle, van, motor home, or any other type of land based vehicle. It should be appreciated that the motor vehicle may also be that of a water based vehicle such as a motor boat or an air base vehicle such as an airplane without departing from the scope of the present disclosure.

The motor vehicle 300 includes a plurality of cameras 302 configured to capture images of the areas surrounding the motor vehicle 300. The exemplary motor vehicle 300 includes a front camera 302A, a right-side camera 302B, a left-side camera 302C, and a rear camera 302D. Each of the aforementioned cameras 302A-302D is configured to capture visual information in the visible light spectrum and/or in a non-visual (e.g. infrared) portion of the light spectrum in the field of view, or visual area of coverage, of the respective camera.

The motor vehicle 300 also includes a plurality of ranging sensors 304 distributed about the periphery of the motor vehicle and are configured to detect objects including, but not limited to, pedestrians, traffic markings, obstacles, and land features in the surrounding areas and volume of space about the motor vehicle. The surrounding areas include all the areas surrounding the vehicle that are within the effective range and field of coverage of the sensors including the areas adjacent the motor vehicle, the areas spaced from the motor vehicle, and the areas located 360 degrees about the motor vehicle.

FIG. 3 shows ranging sensors 304A-304F mounted on the periphery of the motor vehicle 300. Each of the ranging sensors 304A-304F may include any ranging technology, including radar, LiDAR, sonar, etc., capable of detecting a distance and direction between an object, and the motor vehicle. The motor vehicle 300 may also include a scanning laser 306 mounted on top of the vehicle configured to scan the volume of space about the vehicle to detect the presence, direction, and distance of objects with that volume of space.

Each of the different types of external sensors 302, 304, 306 have their own unique sensing characteristics and effective ranges. The sensors 302, 304, 306 are placed at selected locations on the vehicle and collaborate to collect information on areas surrounding the motor vehicle. The sensor information on areas surrounding the motor vehicle may be obtained by a single sensor, such the scanning laser, capable of scanning a volume of space about the motor vehicle or obtained by a combination of a plurality of sensors. The raw data from the sensors 302, 304, 306 are communicated to a pre-processor or directly to the perception controller 202 for processing. The perception controller 202 is in communication with the vehicle SDL controller 212, which is in communications with a various vehicle control systems.

The motor vehicle 300 includes a V2X receiver 208 and V2X transmitter 222, or a V2X transceiver 310. The V2X transceiver 310 may include a circuit configured to use Wi-Fi and/or Dedicated Short Range Communications (DSRC) protocol for communication other vehicles equipped with V2V communications and to roadside units equipped with V2X communications to receive information such as lane closures, construction-related lane shifts, debris in the roadway, and stalled vehicles. The V2X receiver 208 and transmitters 222 enable the motor vehicle 300 to subscribe to other PSGs generated by other similaly equipped vehicles and/or roadside units. The V2X transceiver 310 also enable the motor vehicle 300 to communicate the PSG 112 generated by the perception controller 202 to other similarly V2X equipped vehicles or infrastructure units. Similarly equipped vehicles or infrastructure units within range of the V2X transmitter 310 may subscribe to the published PSG 112.

The motor vehicle includes a vehicle locator 204, such as a GPS receiver, configured to receive a plurality of GPS signals from GPS satellites to determine the longitude and latitude of the motor vehicle as well as the speed of the motor vehicle and the direction of travel of the motor vehicle. The location, speed, and direction of travel of the motor vehicle may be fused with the PSG 112 to virtually locate the motor vehicle within the PSG 112.

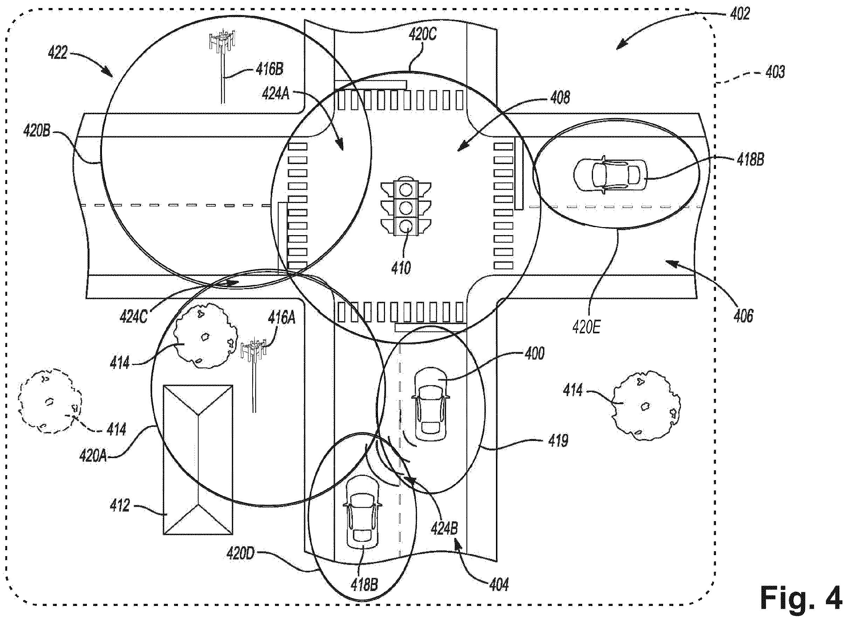

FIG. 4 shows an illustration of an exemplary host vehicle 400 traveling within an exemplary geographical area 402 of interest. The host motor vehicle 400 is equipped with the perception system 200 of FIG. 2 including the externals sensors 302, 304, 306 and V2X receiver/transmitter 208, 222 of FIG. 3. The geographical area 402 includes a boundary 403 that extends beyond the effective ranges of the external sensors 302, 304, 306 of the host vehicle 400. The extent of the boundary 403 may be determined based on an interest that a host vehicle operator may have of the geographical area. The interest may include autonomously navigating through the geographical area 402, live traffic updates, accident notifications, and/or real time mapping of the geographical area 402.

The geographical area 402 includes a first roadway 404, a second roadway 406 substantially perpendicular to the first roadway 404, and an intersection 408 at the junction of the first and second roadways 404, 406. The intersection 408 includes a traffic light 410 that directs vehicle traffic between the first roadway 404 and the second roadway 406. Artificial infrastructures such as buildings 412 and natural structures such as trees 414 are positioned at various locations along the first and second roadways 404, 406.

The host vehicle 400 is shown traveling within the first roadway 404 toward the intersection 408. A plurality of remote units including remote roadside units 416 and remote vehicles 418 are also shown in the geographical area 402. A first remote roadside unit 416A is shown positioned adjacent the first roadway 404 and a second remote roadside unit 416B is shown positioned adjacent the second roadway 406. A first remote vehicle 418A is shown traveling in the same direction as the host vehicle 400 in an adjacent lane. A second remote vehicle 418B is shown traveling in the second roadway 406 toward the intersection 408. The traffic light 410, roadside units 416, and remote vehicles 418 are each equipped with a similar perception system, external sensors, and V2X communication capabilities as that of the host vehicle 400.

The perception system 200 of the host vehicle 400 generates a host perception scene graph (Host PSG) 419 of an area surrounding the host vehicle 400. The perception system of the first remote roadside unit 416A generates a first remote perception scene graph (1st Remote PSG) 420A of an area surrounding the first remote roadside unit 416A including a portion of the first roadway 404 adjacent the intersection 408. The perception system of the second roadside unit 416B generates a second perception scene graph (2nd Remote PSG) 420B of an area surrounding the second roadside unit 416B including a portion of the second roadway 406 adjacent the intersection 408. The perception system of the traffic light 410 generates a third perception scene graph (3rd Remote PSG) 420C of an area surrounding the traffic light 410 including the intersection 408. The perception system of the first remote vehicle 418A generates a fourth perception scene graph (4th PSG) 420D of an area surrounding the first remote vehicle 418A. The perception system of the second remote vehicle 418B generates a fifth perception scene graph (5th Remote PSG) 420E of an area surrounding the second remote vehicle 418B.

The 1st, 2nd, 3rd, 4th, and 5th Remote PSGs (collectively referred to as "Remote PSG 420") are communicated to the perception system 200 of the host vehicle 400 utilizing V2X communications. The perception system 200 of the host vehicle 400 then fuses the Remote PSG 420 with the Host PSG 419 to generate a wide-area perception scene graph (Wide-Area PSG) 422. The Wide-Area PSG 422 includes the information contained in the Remote PSG 420, thereby extending the perception of the host vehicle 400 beyond the effective ranges of the external sensors 302, 304, 306 of the host vehicle 400.

While the Wide-Area PSG 422 represent a greater area of the geographical area 402 beyond the sensor ranges of the external sensors of the host vehicle 400, it might not include the complete geographical area 402. This may be due to insufficient remote units 416, 418 within the geographical areas to generate sufficient Remote PSG 420 to represent the entire geographical area 402 of interest. To supplement the information gathered by the remote units 416, 418, the perception system 200 may fuse supplementary information such as preloaded maps of the geographical area 402 or information extracted from previously generated perception scene graphs with the Remote PSG 420 to generate a Wide-Area PSG 422 representing the complete geographical area 402 of interest. It is desirable that only the information that is not highly time dependent be extracted from previously generated perception scene graphs. Not highly time dependent information includes enduring structures such as buildings, trees, and roadways.

The Wide Area PSG 422 may contain information on a set of localized objects, categories of each object, and relationship between each object and the host motor vehicle 400. The Wide-area PSG 422 is continuously updated and historical events of the Wide-Area PSG 422 may be recorded. There may be overlapping regions (generally referred to as "overlapping regions 424") between the Host PSG 419 and Remote PSG 420, or between adjacent Remote PSG 420. Examples of overlapping regions are indicated with reference numbers 424A, 424B, 424C. The overlapping regions 424 may contain high fidelity information due to the overlapping of adjacent perception scene graphs. If the host vehicle 400 has a need for high fidelity information in the overlapped regions 424, such as when the host vehicle 400 designates a focus zone that is within an overlap region such as overlap region 424B, the higher fidelity information may be extracted from the Wide-Area PSG 422 for that particular overlap region. It should be appreciated that the focus regions do not necessary have to be adjacent to the host vehicle 400.

As an example, the host vehicle 400 is illustrated with an exemplary focus region 424B defined adjacent to the left-rear quarter of the host vehicle 400. In this example, a software routine in the SDL controller of the host vehicle 400 would request detailed information from the focus region 424B for the detection of objects in the vehicle's blind spot. This would be similar to the action taken by a human driver of turning his/her head to see if a vehicle is present before the human driver performs a lane change.

In another example, the host vehicle 400 is virtually operating, or towing, the first remote vehicle 418A located in the adjacent lane behind the host vehicle. In this example, the first remote vehicle 418A is configured equipped for autonomous driving. The host vehicle 400 is communicating or extending the Wide-Area PSG 422 to the first remote vehicle 418A by way of V2X communications. The V2X communications may include autonomous driving commands to instruct the first remote vehicle 418A on navigating the real world portion of the geographical area represented by the Wide-Area PSG 422.

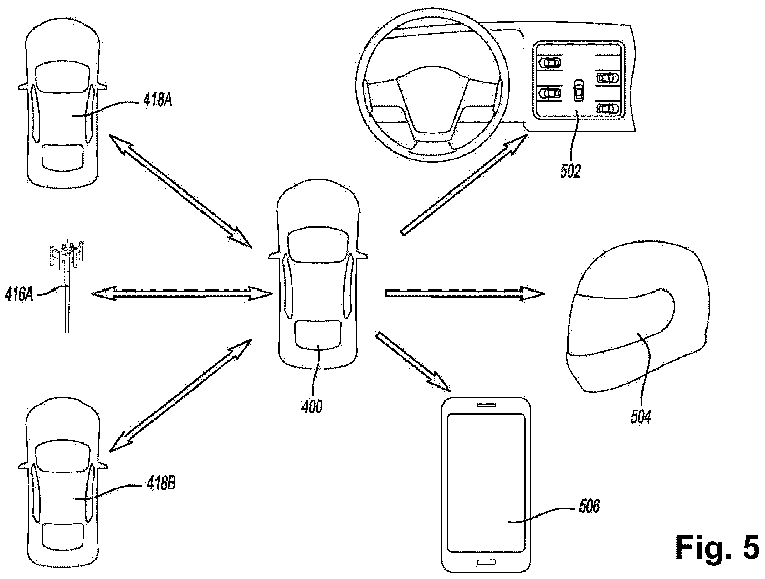

FIG. 5 shows examples of various applications that may utilize the information stored in the Wide-Area PSG 422. The applications include the host vehicle 400 communicating the Wide-Area PSG 422 to similarly equipped motor vehicles 418A, 418B or roadside unit 416A by utilizing V2X communications, rendering the Wide-Area PSG on a HMI such as a display 502 on the dashboard of the motor vehicle or a display visor 504 within a helmet, or extending the Wide-Area PSG to a portable electronic device 506 such as a smart phone or tablet. The portable electronic device 506 may be programmed to extract information from the Wide-Area PSG 422 for use in a software application or render the Wide-Area PSG 422 on a display screen of the portable electronic device 506. The portable electronic device 506 may be located within the passenger compartment of the motor vehicle or located outside of the geographical area 402.

The Wide-Area PSG 422 may be rendered as a three-dimensional (3-D) model of the real-world environment representing the geographical area 402 of interest. Objects in the Wide-Area PSG 422 may be rendered to include details such as texture, lighting, shading, and color. The rendering of the 3-D model may be continuously updated in real time as new information is fused to the Wide-Area PSG 422 as the host motor vehicle 400 travels through the geographical area of interest 402.

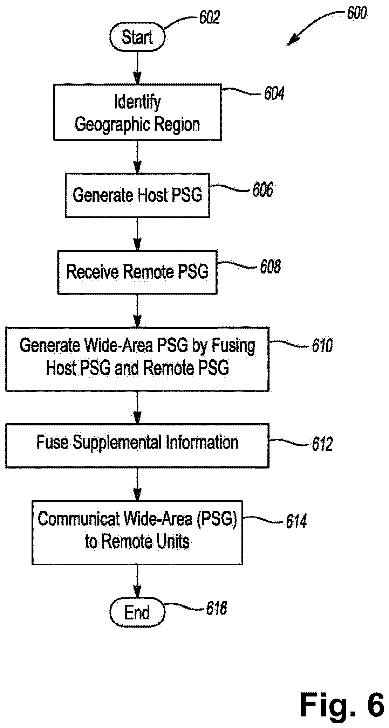

FIG. 6 shows a flowchart of a method 600 for generating a Wide-Area PSG 422. The method starts in step 602. In step 604 a geographical area of interest is identified. The geographical area of interest is preferably the area that a host unit is located in or traveling through, such as a section of town or country. The host unit may include that of a host vehicle or a host infrastructure unit such as roadside unit. The geographical area includes the areas surrounding the host unit that are beyond the effective ranges of the external sensors of the host unit.

In step 606, the external sensors of the host unit collect information on the areas surrounding the host unit. The surrounding areas include all the areas surrounding the host unit that are within the effective range and field of coverage of the external sensors, including the areas adjacent the host unit, the areas spaced from the host unit, and the areas located 360 degrees about the host unit. A perception controller processes the collected sensor information and generates a host perception scene graph (Host PSG). The Host PSG includes a virtual model of the areas surrounding the host unit detected by the external sensors.

In step 608, the host unit receives at least one remote perception scene graph (Remote PSG) generated by at least one remote unit, such as that of a remote vehicle or remote infrastructure unit within the identified geographical area. The Remote PSG may be communicated to the host unit by utilizing V2X communications. The Remote PSG includes a virtual model of the areas surrounding the remote unit.

In step 610, the perception system on the host unit fuses the Host PSG with the Remote PSG to generate a Wide-Area perception scene graph (Wide-Area PSG). The Wide-Area PSG includes a virtual model of a portion of the geographical area extending beyond the effective sensor range of the host vehicle. Over-lapping regions between the Host PSG and Remote PSG, or between Remote PSGs, may be fuses to obtain greater fidelity and confidence levels in the overlapping regions.

In step 612, a preloaded map of the geographical area or other applicable information may be fused with the Wide-Area PSG to supplement the regions of the Wide-Area PSG, where there is insufficient information to provide detailed information, to expand the Wide-Area PSG to cover the entire geographical area of interest.

In step 614 the Wide-Area PSG is communicated out to similarly equipped remote units utilizing V2X communications. The Wide-area PSG becomes accessible by various vehicle systems that require information about the surroundings of the host unit. The method ends in step 616.

The method and system for generating a wide-area PSG enables a host unit to perceive a wider geographic area beyond the effective sensor ranges of the external sensors of the host unit. The Wide-Area PSG may be communicated to similarly equipped remote units to enable the remote units to perceive a wider geographic area beyond the effective sensor ranges of the remote unit. Instructions such as vehicle commands to navigate a vehicle through the geographic area of interest as represented by the Wide-Area PSG maybe be communicated to a remote unit from the host unit by utilizing V2X communications.

The disclosure has described certain preferred embodiments and modifications thereto. Further modifications and alterations may occur to others upon reading and understanding the specification. Therefore, it is intended that the disclosure not be limited to the particular embodiment(s) disclosed as the best mode contemplated for carrying out this disclosure, but that the disclosure will include all embodiments falling within the scope of the appended claims.

## Claims

1. A method (600) of generating a wide-area perception scene graph (422), comprising the steps of:
- identifying a geographical area (402) of interest;
- generating, by a host perception system on a host unit located within the geographical area (402), a host perception scene graph (Host PSG) (419) comprising a virtual representation of an area surrounding the host unit;
- communicating a Remote PSG (420) to the host perception system on the host unit; and
- fusing the Host PSG (419) with the Remote PSG (420), by the host perception system, thereby generating a wide-area perception scene graph (Wide-Area PSG) (422);
wherein the Wide-Area PSG (422) comprises a virtual representation of a portion of the geographical area (402) beyond the area surrounding the host unit.

2. The method (600) of claim 1, further comprising the step of generating the Remote PSG (420) by a remote perception system on the remote unit located within the geographical area (402), wherein the Remote PSG (420) comprises a virtual representation of an area surrounding the remote unit.

3. The method (600) of claims 1 or 2, wherein one of the host unit and the remote unit is a vehicle roaming within the geographical area (402), and the other of the host unit and the remote unit is a stationary infrastructure unit.

4. The method (600) of any one of claims 1 to 3, wherein the step of communicating the Remote PSG (420) to the host perception system on the host unit is conducted by utilizing vehicle-to-everything (V2X) communications.

5. The method (600) of claim 4, further comprising steps of:
- generating, by a plurality of remote units located in various locations within the geographical area (402), a plurality of Remote PSGs (420), wherein each of the plurality of Remote PSGs (420) comprises a virtual representation of an area surrounding the respective remote units;
- communicating the plurality of Remote PSGs (420) to the host unit; and
- fusing the Host PSG (419) with the plurality of Remote PSGs (420) by the host perception system to generate a Wide-Area PSG (422) comprising a virtual representation of a greater portion of the geographical area (402) than any one of the Host PSG (419) or Remote PSG (420) individually;
wherein preferably the host unit is a motor vehicle, and the remote unit includes a plurality of motor vehicles and road-side-units.

6. The method (600) of claim 5, wherein the host unit is a portable communication device configured to visually display the Wide-area PSG (422), and wherein the portable communication device is preferably a visual display in a helmet.

7. The method (600) of claims 5 or 6, further comprising the step of extending the Wide-Area PSG (422) using wire-less communication to a portable communication device configured to visually display the Wide-Area PSG (422).

8. The method (600) of any one of claims 5 to 7, wherein the plurality of Remote PSGs (420) includes over-lapping regions (424); and the method (600) further comprises the steps of:
- defining a focus zone within the geographical area (402);
- identifying over-lapping regions (424) within the focus zone; and
- fusing the overlapping regions (424) to obtain greater fidelity and confidence levels in the overlapping regions (424) within the focus zone.

9. The method (600) of any one of claims 5 to 8, wherein the Wide-Area PSG (422) comprises regions of insufficient information provided by the Host PSG (419) or the Remote PSG (420); and further include the step of fusing a preloaded map of the geographical area (402) to supplement the regions of the Wide-Area PSG (422) having regions of insufficient information.

10. The method (600) of claim 1, wherein the Wide-Area PSG (422) is generated by a motor vehicle; wherein the step of generating the Host PSG (419) comprises the steps of
- collecting sensor information, by at least one external sensor having an effective sensor range, about an area surrounding a host motor vehicle (400);
- processing the sensor information, by a perception controller (202) being part of the host perception system, to generate the Host PSG (419); wherein the step of
- communicating the Remote PSG (420) comprises the step of
- receiving a remote perception scene graph (Remote PSG) (420) transmitted from at least one remote unit proximal to the host vehicle, wherein the Remote PSG (420) comprises a virtual model of an area surrounding the at least one remote unit; and wherein the step of
- fusing the Host PSG (419) with the Remote PSG (420) is executed by the perception controller (202).

11. The method (600) of claim 10, further comprising the step of transmitting the Wide-Area PSG (422) to the at least one remote unit and preferably the step of transmitting instructions to the at least one remote unit, wherein the instructions includes autonomous driving instructions.

12. The method (600) of claim 11, wherein the steps of receiving the Remote PSG (419) and transmitting the Wide-Area PSG (422) is performed by utilizing vehicle-to-everything (V2X) communications.

13. The method (600) of any one of claims 10 to 12, further comprising the step of extending the Wide-Area PSG (422) to a portable electronic device (506) by utilizing short-range wireless communications, wherein the portable electronic device (506) preferably includes a display visor for an operator of the motor vehicle.

14. A perception system (200) for generating a Wide-Area perception scene graph (PSG) (422), comprising:
- a human machine interface (HMI) configured to receive an input, wherein the input includes a location of a geographical area (402);
- a receiver configured to receive a remote perception scene graph (Remote PSG) (420) generated by a remote unit located within the geographical area (402), wherein the Remote PSG (420) comprises a virtual representation of an area surrounding the remote unit;
- a host external sensor configured to collect sensor information about an area surrounding a host unit located with the geographical area (402);
- a processor configured to process the collected sensor information to (i) generate a host perception scene graph (Host PSG) (419) comprising a virtual representation of the area surrounding the host unit and (ii) to fuse the Remote PSG (420) with the Host PSG (419) to generate a Wide-Area perception scene graph (Wide-Area PSG) (422) comprising a portion of the geographical area (402); and preferably
- a vehicle-to-everything (V2X) communication device for receiving the Remote PSG (420).

15. The perception system of claim 14, further comprising a short-range wireless communication device for extending the Wide-Area PSG (422) to a portable electronic device (506), wherein the portable electronic device (506) is preferably a smart phone.
